# EUROPEAN PATENT SPECIFICATION

(11) **EP 3 553 986 B1**
(45) Date of publication and mention of the grant of the patent: **26.10.2022**
(21) Application number: 18744198.5
(22) Date of filing: 24.01.2018
(51) Int. Cl.: H04L 1/18, H04L 1/16, H04L 1/00, H04L 5/00

(54) **TRANSMISSION METHOD, NETWORK EQUIPMENT, AND TERMINAL EQUIPMENT**
ÜBERTRAGUNGSVERFAHREN, NETZWERKAUSRÜSTUNG UND ENDGERÄTEAUSRÜSTUNG
PROCÉDÉ DE TRANSMISSION, ÉQUIPEMENT DE RÉSEAU ET ÉQUIPEMENT TERMINAL

(30) Priority: 26.01.2017 CN 201710061853
(43) Date of publication of application: 16.10.2019
(73) Proprietor: Huawei Technologies Co., Ltd., Longgang District Shenzhen, Guangdong 518129 (CN)
(72) Inventor: WU, Yiqun, Shenzhen Guangdong 518129 (CN); XU, Xiuqiang, Shenzhen Guangdong 518129 (CN); CHEN, Yan, Shenzhen Guangdong 518129 (CN)
(74) Representative: Pfenning, Meinig & Partner mbB
(86) International application number: PCT/CN2018/074030
(87) International publication number: WO 2018/137664

(56) References cited:
- CN-A- 105 284 172
- CN-A- 106 160 983
- KR-A- 20090 122 862
- ZTE: "Discussion on grant-free transmission based on sensing", 3GPP DRAFT; R1-1609801 - DISCUSSION ON GRANT-FREE TRANSMISSION BASED ON SENSING, 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. RAN WG1, no. Lisbon, Portugal; 20161010 - 20161014 9 October 2016 (2016-10-09), XP051149828, Retrieved from the Internet: URL:http://www.3gpp.org/ftp/Meetings_3GPP_ SYNC/RAN1/Docs/ [retrieved on 2016-10-09]
- ERICSSON: "7.1.7", 3GPP DRAFT; R1-1612955, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, Nevada, US; 20161114 - 20161118 13 November 2016 (2016-11-13), XP051176893, Retrieved from the Internet: URL:http://www.3gpp.org/ftp/Meetings_3GPP_ SYNC/RAN1/Docs/ [retrieved on 2016-11-13]

## Description

### TECHNICAL FIELD

The present invention relates to a data transmission method and user equipment.

### BACKGROUND

In an existing wireless communications network (for example, Long Term Evolution, LTE), a scheduling/grant (Scheduling/Grant)-based mechanism is used for uplink data transmission, and therefore uplink data transmission is completely controlled by a base station (Base Station, BS). In this mechanism, user equipment (User Equipment, UE) first sends an uplink scheduling request to a BS; after receiving the request, the BS sends an uplink grant (Uplink Grant, UL Grant) to the UE to notify the UE of an uplink transmission resource allocated to the UE; and the UE sends uplink data on the allocated uplink transmission resource. The mechanism is also referred to as a grant-based (Grant-based, GB) transmission mechanism.

Massive machine-type communications (Massive Machine Type Communication, mMTC) is a typical application scenario of a next-generation communications network. The mMTC has the following typical features: There are a huge quantity of connections, that is, there are a huge quantity of UEs; a small data packet service is a main service type; and there is a specific requirement for a transmission latency. When massive UEs access a wireless communications network, if the foregoing scheduling/grant-based mechanism is still used, excessive signaling transmission overheads are caused and a BS is under great pressure to allocate and schedule resources; in addition, a notable transmission latency is caused. Ultra-reliable and low-latency communications (Ultra Low Latency and Reliable Communication, URLLC) is another typical application scenario of the next-generation communications network. For URLLC scenarios such as the Internet of vehicles, self-driving, and industrial control, systems have high requirements for a latency and reliability. In some URLLC application scenarios, systems require a transmission latency to be less than 1 ms, but an existing GB transmission mechanism cannot meet such a high latency requirement.

In view of this, a grant-free (Grant-Free, GF) transmission mechanism may be used in the next-generation communications network to support access of massive UEs and low-latency data transmission. In the GF transmission mechanism, uplink data transmission of UE does not require a dynamic and/or explicit grant from a base station. In comparison with the GB transmission mechanism, in the GF transmission mechanism, a transmission latency is greatly shortened because a process of sending an uplink scheduling request and waiting for receiving a grant of the base station is not required, thereby meeting latency requirements of the mMTC scenario and the URLLC scenario.

To support the GF transmission mechanism, a BS may pre-configure some parameters for uplink transmission of UE through semi-static configuration, such as a location and a size of a time-frequency resource that the UE may use, a modulation and coding scheme (Modulation and Coding Scheme, MCS), and reference signal (Reference Signal, RS) configuration information. After completing the configuration, the BS attempts to detect and demodulate data sent by the UE at a corresponding time-frequency location.

In the GF transmission mechanism, because the UE does not need to obtain a grant of the base station when sending uplink data, a plurality of UEs may contend for transmission of uplink data on a same time-frequency resource. As a result, a contention conflict is caused, and data transmission reliability is reduced. In addition, because wireless transmission is likely to be affected by channel fading and interference, it is possible that the base station cannot correctly receive the data sent by the UE.

To improve the data transmission reliability in the GF transmission mechanism, a data retransmission technology may be used. However, in the prior art, there is a lack of a solution of implementing data retransmission in the GF transmission mechanism.
ZTE, "Discussion on grant-free transmission based on sensing", 3GPP TSG RAN WG1 R1-1609801, describes retransmission options in grant-free uplink transmission applying a sensing algorithm and HARQ feedback, enabling grant-based retransmission through eNB scheduling or asynchronous grant-free retransmission.

### SUMMARY

The invention is set out in the appended set of claims.

In the technical solutions provided in the present invention, the feedback information that is sent by the network device for the first data transmitted in the grant-free transmission mode is listened for, and the transmission mode used after the feedback information is obtained through listening is determined based on the feedback information obtained through listening, to implement a complete data retransmission mechanism in a GF transmission mechanism.

### DESCRIPTION OF DRAWINGS

FIG. 1 is an example schematic diagram of a wireless communications system according to an example;
FIG. 2 is an example flowchart of a data transmission method according to the present invention;
FIG. 3 is an example schematic diagram of a listening time window according to an example;
FIG. 4 is a schematic diagram of data transmission according to an example;
FIG. 5 is another schematic diagram of data transmission according to an example;
FIG. 6 is still another schematic diagram of data transmission according to an example; and
FIG. 7 is an example schematic diagram of a hardware structure of user equipment according to the present invention.

### DESCRIPTION OF EMBODIMENTS

The following describes technical solutions of this application with reference to accompanying drawings.

Terms such as "component", "module", "system", and "unit" used in this specification are used to indicate computer-related entities, hardware, firmware, combinations of hardware and software, software, or software being executed. For example, a component may be but is not limited to a process running on a processor, a processor, an object, an executable file, a thread of execution, a program, and/or a computer. As shown in figures, both an application running on a computing device and the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, a distributed system, and/or across a network such as the Internet interacting with other systems by using the signal).

It should be understood that implementations of this application may be applied to various communications systems, such as a global system for mobile communications (Global System for Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, a long term evolution advanced (Advanced long term evolution, LTE-A) system, a universal mobile telecommunications system (Universal Mobile Telecommunication System, UMTS), or a next-generation communications system.

The implementations of this application describe the implementations with reference to a terminal device. User equipment (User Equipment, UE) may be a terminal device, an access terminal, a subscriber unit, a subscriber station, a mobile station, a mobile console, a remote station, a remote terminal, a mobile device, a user terminal, a terminal, a wireless communications device, a user agent, or a user apparatus. The terminal device may be a station (STATION, STA) in a wireless local area network (Wireless Local Area Networks, WLAN), or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device or another processing device connected to a wireless modem, an in-vehicle device, a wearable device, a terminal device in a next-generation communications system such as a fifth-generation (fifth-generation, 5G) communications network, a terminal device in a future evolved public land mobile network (Public Land Mobile Network, PLMN), or the like.

By way of example but not limitation, in the implementation of this application, the terminal device may alternatively be a wearable device. The wearable device may also be referred to as a wearable intelligent device, and is a generic term of wearable devices developed by applying a wearable technology to intelligent design of daily wear, such as glasses, a glove, a watch, clothing, and a shoe. The wearable device is a portable device directly worn on a body or integrated into clothes or an accessory of a user. The wearable device is not merely a hardware device, and further implements powerful functions through software support, data exchange, and cloud interaction. In a broad sense, wearable intelligent devices include a fully-featured and large-sized device that can implement all or some functions independently of a smartphone, for example, include a smartwatch or smart glasses; and include a device that is dedicated to only one type of application function and that needs to be used in cooperation with another device such as a smartphone, for example, include various types of smart bands and smart jewelry used for sign monitoring.

In addition, the implementations of this application describe the implementations with reference to a network device. The network device may be any device that can directly communicate with UE and that is configured to control the UE to access a communications network, such as a base station, a relay node, or an access point. The base station may be a network device, such as a BTS (Base Transceiver Station, base transceiver station) in a GSM (Global System for Mobile communication, global system for mobile communications) network or a CDMA (Code Division Multiple Access, code division multiple access) network, an NB (NodeB) in a WCDMA (Wideband Code Division Multiple Access, wideband code division multiple access) network, an eNB or an eNodeB (evolved NodeB) in LTE (Long Term Evolution, long term evolution), or a base station device in a next-generation (for example, 5G) wireless communications network.

In addition, in the implementations of this application, the network device provides a service for a cell, and the terminal device communicates with the network device by using a transmission resource (for example, a frequency domain or a spectrum resource) used in the cell. The cell may be a cell corresponding to the network device (for example, a base station). The cell may belong to a macro base station or may belong to a base station corresponding to a small cell (small cell). The small cell herein may include a metro cell (Metro cell), a micro cell (Micro cell), a pico cell (Pico cell), a femto cell (Femto cell), and the like. These cells are characterized by a small coverage area, low transmit power, and the like, and are suitable for providing a high-rate data transmission service.

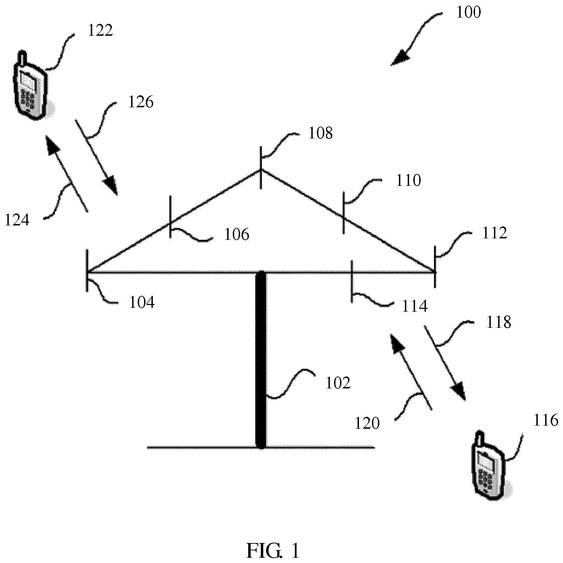

FIG. 1 is a schematic diagram of a wireless communications system according to an example. As shown in FIG. 1, the communications system 100 includes a network device 102, and the network device 102 may include one or more antennas such as antennas 104, 106, 108, 110, 112, and 114. In addition, the network device 102 may additionally include a transmitter chain and a receiver chain. A person of ordinary skill in the art may understand that the transmitter chain and the receiver chain each may include a plurality of components (for example, a processor, a modulator, a multiplexer, a demodulator, a demultiplexer, or an antenna) related to signal sending and receiving.

The network device 102 may communicate with a plurality of UEs (for example, UE 116 and UE 122). However, it may be understood that the network device 102 may communicate with any quantity of UEs similar to the UE 116 or the UE 122. The UEs 116 and 122 each may be, for example, a cellular phone, a smartphone, a portable computer, a handheld communications device, a handheld computing device, a satellite radio apparatus, a Global Positioning System, a PDA, and/or any other suitable device used for communication in the wireless communications system 100.

As shown in FIG. 1, the UE 116 communicates with the antennas 112 and 114, where the antennas 112 and 114 send information to the UE 116 over a forward link (also referred to as a downlink) 118, and receive information from the UE 116 over a reverse link (also referred to as an uplink) 120. In addition, the UE 122 communicates with the antennas 104 and 106, where the antennas 104 and 106 send information to the UE 122 over a forward link 124, and receive information from the UE 122 over a reverse link 126.

For example, in a frequency division duplex (Frequency Division Duplex, "FDD" for short) system, different frequency bands may be used for the forward link 118 and the reverse link 120, and different frequency bands may be used for the forward link 124 and the reverse link 126.

For another example, in a time division duplex (Time Division Duplex, "TDD" for short) system and a full duplex (Full Duplex) system, a same frequency band may be used for the forward link 118 and the reverse link 120, and a same frequency band may be used for the forward link 124 and the reverse link 126.

Each antenna (or an antenna group including a plurality of antennas) and/or area that are/is designed for communication is referred to as a sector of the network device 102. For example, an antenna group may be designed to communicate with UE in a sector within a coverage area of the network device 102. The network device may send, by using a single antenna or a multi-antenna transmit diversity, signals to all UEs in the sector corresponding to the network device. In a process in which the network device 102 respectively communicates with the UEs 116 and 122 over the forward links 118 and 124, transmit antennas of the network device 102 may improve signal-to-noise ratios of the forward links 118 and 124 through beamforming. In addition, in comparison with a manner in which the network device sends the signals to all the UEs by using the single antenna or the multi-antenna transmit diversity, when the network device 102 sends, through beamforming, signals to the UEs 116 and 122 that are randomly distributed in a related coverage area, less interference is caused to a mobile device in a neighboring cell.

Within a given time, the network device 102, the UE 116, or the UE 122 may be a wireless communications sending apparatus and/or a wireless communications receiving apparatus. When sending data, the wireless communications sending apparatus may encode the data for transmission. Specifically, the wireless communications sending apparatus may obtain (for example, generate; receive, from another communications apparatus; or store, in a memory,) a specific quantity of data bits that need to be sent to the wireless communications receiving apparatus through a channel. The data bits may be included in a transport block (or a plurality of transport blocks) of data, and the transport block may be segmented to generate a plurality of code blocks.

In this application, a grant-free transmission manner means that UE does not require a grant from a network device when transmitting data to the network device, and a grant-based transmission manner means that UE requires a grant from a network device when transmitting data to the network device.

In a GF transmission mechanism, data sent by different terminals is very likely to collide at the network device, and consequently data transmission reliability is reduced. To improve the data transmission reliability in the GF transmission mechanism, a data retransmission technology may be used. However, in the prior art, there is a lack of a solution of implementing data retransmission in the GF transmission mechanism. Therefore, there is an urgent need for a technical solution that is of implementing data retransmission and that can be applied to the GF transmission mechanism to improve the data transmission reliability in the GF transmission mechanism.

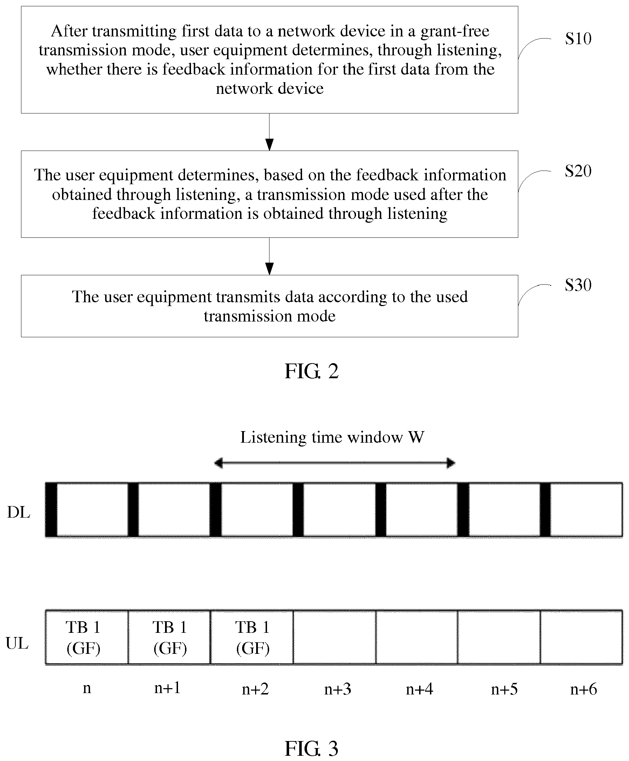

The present invention provides a data transmission method. As shown in FIG. 2, the method includes the following steps.

Step S10: After transmitting first data to a network device 102 in a grant-free transmission mode, UE 116 determines, through listening, whether there is feedback information for the first data from the network device 102.

After the UE 116 transmits the first data to the network device 102 in a grant-free manner for the first time, the network device 102 may determine, based on whether the network device 102 can detect the data sent by the UE 116 and whether the network device 102 can correctly demodulate or decode the detected data, whether to send the feedback information and specific content of the feedback message to the UE 116.

When the network device 102 cannot detect, within a predetermined time, the data sent by the UE 116, the network device 102 does not send any feedback information.

When the network device 102 can detect, within a predetermined time, the data sent by the UE 116 but cannot correctly demodulate or decode the detected data, the network device 102 sends feedback information to the UE 116, where the feedback information includes first information instructing to retransmit the first data. In a specific implementation, the first information instructing to retransmit the first data may be a NACK, or may be uplink transmission grant information for the first data. The NACK and the uplink transmission grant information each may include information indicating a number of the first data, or include a number of a process used to transmit the first data. The uplink transmission grant information for the first data may further include information such as a time-frequency resource allocated for retransmitting the first data, and a modulation and coding scheme (Modulation and Coding Scheme, MCS). The uplink transmission grant information may be carried in DCI sent to the UE 116. In this implementation, the network device 102 may further add second information to the feedback information to be sent, where the second information is used to instruct the UE UE 116 to: stop transmitting data, or transmit data in the grant-free transmission mode, or transmit data in a grant-based transmission mode within a time resource after the UE 116 completes data retransmission in the grant-based transmission mode once. The second information may be added to the first information, or may be included in the feedback information together with the first information.

When the network device 102 can detect, within a predetermined time, the data sent by the UE 116, and further can correctly demodulate or decode the detected data, the network device 102 sends feedback information to the UE 116, where the feedback information includes third information indicating that the first data has been correctly received. In a specific implementation, the third information may be an ACK.

To obtain the feedback information for the first data, the UE 116 may determine, through listening on each TTI after the first data is sent, whether there is the feedback information for the first data from the network device 102, or may determine, through listening in a predetermined listening time window, whether there is the feedback information.

FIG. 3 shows an example of the predetermined time window. In FIG. 3, there are seven transmission time intervals (Transmit Time Interval, TTI), respectively numbered n, n+1, n+2, n+3, n+4, n+5, and n+6, lattices at an upper row indicate that the network device 102 sends downlink control information or downlink data to the UE 116 within each TTI, and the control information is usually located at a front part within each TTI. A lower row indicates that the UE 116 sends uplink data to the network device 102 within each TTI. A block with a number n and with a TB 1 (GF) indicates that the TB 1 is transmitted in the grant-free transmission mode within a TTI numbered n, and other blocks are deduced by analogy. The TB 1 transmitted within the TTI numbered n is a TB 1 transmitted for the first time, and a TB 1 transmitted within another TTI is a retransmitted TB 1. A listening time window W is three TTIs numbered from n+2 to n+4. Listening in the predetermined listening time window for the feedback information can reduce a quantity of listening times of the UE.

Step S20: The UE 116 determines, based on the feedback information obtained through listening, a transmission mode used after the feedback information is obtained through listening.

It can be learned from the foregoing that the feedback information sent by the network device 102 includes a plurality of types of content, and different content of the feedback message is corresponding to different processing performed by the UE 116.

Step S20 includes: when the feedback information obtained through listening includes the first information, determining, based on the feedback information, a transmission mode used within a first time resource, where the first time resource is a time interval between a time at which the first data is retransmitted according to the instruction of the first information and a time at which the feedback information is obtained through listening for a next time.

In a specific implementation, the determining, based on the feedback information, a transmission mode used within a first time resource includes: when determining that the first information is a NACK, determining that the transmission mode used in the first time resource is transmitting the first data in the grant-free transmission mode within the first time resource. This implementation is not an embodiment of the present invention but helpful for understanding certain aspects thereof.

The determining, based on the feedback information, a transmission mode used within a first time resource includes: when determining that the first information is uplink transmission grant information for the first data, determining, based on pre-stored configuration information or second information that is included in the feedback information, the transmission mode used within the first time resource, where the configuration information is used to instruct to: stop transmitting data in a grant-based transmission mode within a time resource after data retransmission is completed in the grant-based transmission mode once. The configuration message may be agreed upon in a standard, or may be a broadcast message from the network device 102, or higher layer signaling such as RRC signaling sent by the network device 102 to the UE 116.

The determining, based on pre-stored configuration information or second information that is included in the feedback information, the transmission mode used within the first time resource includes: when the configuration information or the second information instructs to stop transmitting data, skipping, by the user equipment 116, transmitting any data within the first time resource.

In an implementation, the determining, based on the feedback information, a transmission mode used within a first time resource includes: when determining that the first information is uplink transmission grant information for the first data, reconfiguring a parameter used for grant-free transmission within the first time resource, where the parameter used for grant-free transmission includes a location of a time-frequency resource used for grant-free transmission and/or a modulation and coding scheme used for grant-free transmission. In the method provided in this implementation, the UE 116 can be prevented from being interfered with by another UE when the UE 116 subsequently transmits data in the grant-free transmission mode. This implementation is not an embodiment of the present invention but helpful for understanding certain aspects thereof.

When the UE 116 does not transmit the first data or any data within the first time resource, interference caused to another UE may be reduced. When a service volume in a communications network increases, the network may be congested. When a plurality of UEs cause interference to each other and collide with each other, the configuration information or the second information may be set to instruct not to send any data within the time resource after data retransmission is completed in the grant-based transmission mode once. In this case, after retransmitting the first data in the grant-based transmission mode once and before receiving the feedback information for a next time, the UE 116 does not send the first data or any data, thereby reducing interference caused to another UE.

When the UE 116 continues to transmit the first data in a grant-free manner within the first time resource, a decoding success probability of the network device 102 may be increased. When the UE 116 is located at an edge of a cell, the configuration information or the second information may be set to instruct to transmit data in the grant-free transmission mode within the time resource after data retransmission is completed in the grant-based transmission mode once. In this case, the first data sent by the UE 116 can be successfully decoded at the network device 102 at a higher probability.

When the first information is uplink transmission grant information for the first data, the UE 116 determines that the transmission mode used within the first time resource includes: skipping transmitting any data within the first time resource.

In an implementation, when the feedback information includes the indicated third information, the UE 16 determines that the transmission mode used after the feedback information is obtained through listening is transmitting the second data in the grant-free transmission mode or skipping transmitting data within the first available time resource after the feedback information is obtained through listening.

In an implementation, the user equipment transmits the first data in the grant-free transmission mode within a second time resource, where the second time resource is a time interval between a time at which the first data is transmitted to the network device in the grant-free transmission mode for the first time and a time at which the feedback information is obtained through listening for the first time. In the solution of this implementation, the first data can be successfully decoded by the network device 102 at a higher probability.

In an implementation, before the UE 116 transmits the first data to the network device 102 in the grant-free transmission mode for the first time, the UE 116 further reports a receiving capability of the user equipment to the network device 102. Different UEs may have different receiving capabilities. For example, some UEs operate in a full-duplex mode, and therefore can receive, while sending data, an ACK/a NACK and uplink transmission grant information that are sent by the network device 102. Some UEs operate in a half-duplex mode, and therefore cannot receive, while sending data, an ACK/a NACK or uplink transmission grant information that is delivered by the network device 102. Further, although operating in a full-duplex mode, some UEs can receive only an ACK/a NACK but cannot receive uplink transmission grant information while sending data. Therefore, the UE needs to report the receiving capability of the UE to the network device 102, so that the network device 102 implements the first information by using a message that can be identified by the UE.

Step S30: The UE 116 transmits data in the transmission mode determined in step S20.

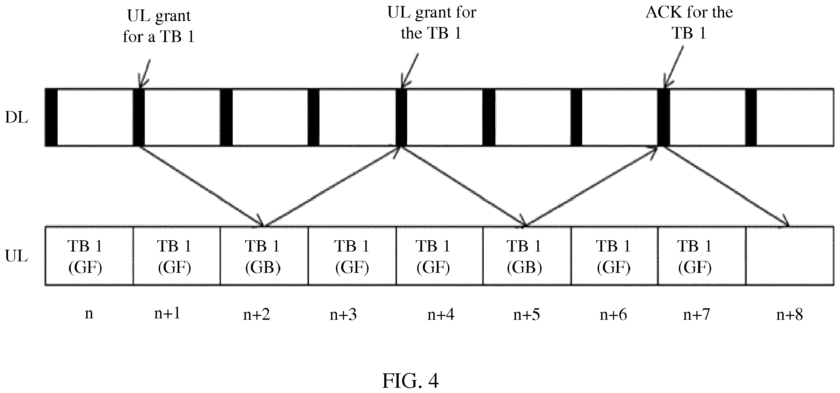

FIG. 4 to FIG. 6 show examples of data transmission in the method shown in FIG. 2. In these examples, the UE 116 uses a plurality of parallel hybrid automatic repeat request (Hybrid Automatic Repeat Request, HARQ) processes when sending data to the network device 102. In each HARQ process, a transport block (Transport Block, TB) is processed in a stop-and-wait manner: stopping and waiting for a corresponding ACK/NACK acknowledgment after transmitting a TB; and transmitting a next TB after receiving the ACK acknowledgment, or retransmitting the TB after receiving the NACK acknowledgment. FIG. 4 shows an example in which the solution shown in FIG. 2 is applied to a specific HARQ process. As shown in FIG. 4, there are nine TTIs numbered from n to n+8, lattices at a row at which a DL is located indicate that the network device 102 sends downlink control information or downlink data to the UE 116 within each TTI, the control information is usually located at a front part in each TTI, and lattices at a row at which a UL is located indicate that the UE 116 sends uplink data to the network device 102 in each TTI.

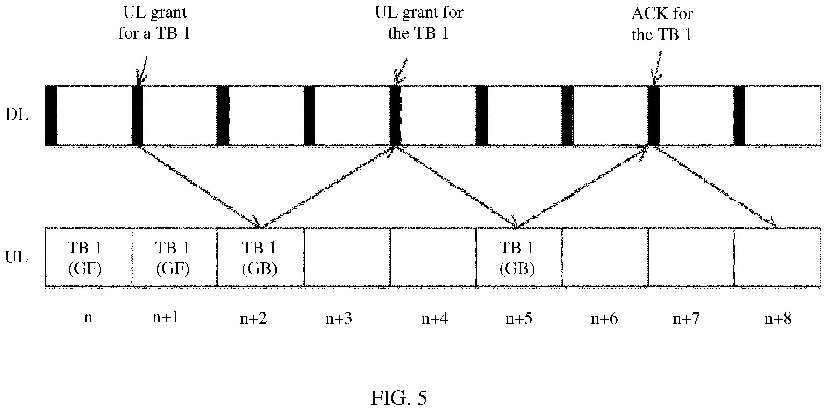

As shown in FIG. 4, the UE 116 transmits a TB 1 within a TTI numbered n through GF transmission for the first time, and then starts to determine, through listening from a slot numbered n+1, whether there is feedback information that is sent by the network device 102 for the TB 1. The network device 102 detects, within the TTI numbered n, that the UE 116 has transmitted data, but the network device 102 does not demodulate the detected data successfully. Then, the network device 102 sends feedback information to the UE 116 within the TTI numbered n+1, where the feedback information is specifically uplink transmission grant information for the TB 1 (a UL Grant for the TB 1). After obtaining the feedback information through listening on the TTI numbered n+1, the UE 116 determines that the feedback information is the uplink transmission grant information for the TB 1 (the UL Grant for the TB 1). Therefore, the UE 116 considers that the TB 1 needs to be retransmitted, and then transmits the TB 1 within a TTI numbered n+2 in a manner specified in the uplink transmission grant information. How to transmit the TB 1 within the TTI numbered n+2 is specified in the uplink transmission grant information sent by the network device, and therefore a manner of transmitting the TB 1 within the TTI numbered n+2 is a grant-based transmission manner. Within the first time resource (from a TTI number n+3 to a TTI number n+4), the UE 116 determines, based on the configuration information, a specific transmission mode used to transmit data. In the example shown in FIG. 4, the used transmission mode indicated in the configuration information is transmitting data through GF transmission. Therefore, in the HARQ process of the UE 116, the TB 1 is transmitted within the two TTIs numbered n+3 and n+4 through GF transmission. When the used transmission mode indicated in the configuration information is sending no data, in the HARQ process of the UE 116, any data is not sent within the two TTIs numbered n+3 and n+4, as shown in FIG. 5.

In the example shown in FIG. 4, if the feedback information sent by the network device 102 includes the second information, the HARQ process of transmitting the TB 1 by the UE 116 is determining, based on the second information instead of the configuration information, whether a transmission mode used within the two TTIs numbered n+3 and n+4 is continuing to transmit the TB 1 through GF transmission or transmitting no data.

It may be understood that in both of the examples shown in FIG. 4 and FIG. 5, the network device 102 sends feedback information for a same TB, that is, the feedback information for the TB 1.

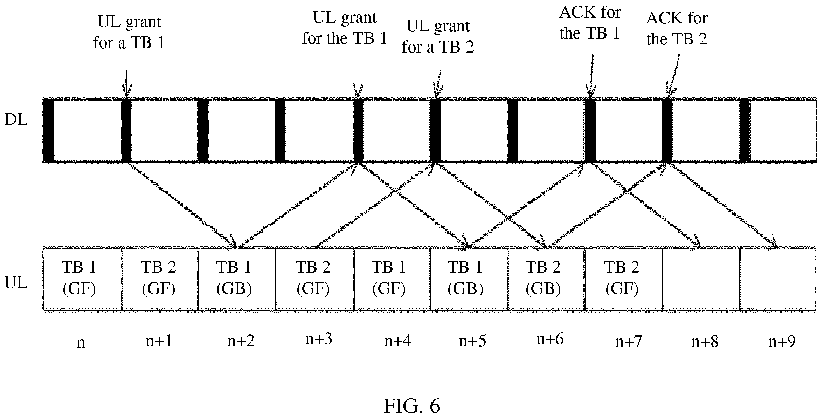

In an example shown in FIG. 6, after the uplink transmission grant information for the TB 1 is received, in the HARQ process of transmitting the TB 1, grant-based transmission of the TB 1 is completed based on the uplink transmission grant information, and the UE 116 determines, based on the foregoing second information or configuration information, transmission modes that are used in a HARQ process of transmitting the TB 1 and a HARQ process of transmitting a TB 2 and that are used after grant-based transmission of the TB 1 is completed.

When the configuration information or the second information instructs to stop transmitting data within the time resource after data retransmission is completed in the grant-based transmission mode once, the UE 116 determines that the transmission modes that are used in the HARQ process of transmitting the TB 1 and the HARQ process of transmitting the TB 2 and that are used after grant-based transmission of the TB 1 is completed are sending data in neither the HARQ process of transmitting the TB 1 nor the HARQ process of transmitting the TB 2.

When the configuration information or the second information instructs to transmit data through GF transmission within the time resource after data retransmission is completed in the grant-based transmission mode once, the UE 116 determines that the transmission modes that are used in the HARQ process of transmitting the TB 1 and the HARQ process of transmitting the TB 2 and that are used after grant-based transmission of the TB 1 is completed are transmitting the TB 1 through GF transmission in the HARQ process of transmitting the TB 1, and skipping changing a current transmission mode in the HARQ process of transmitting the TB 2.

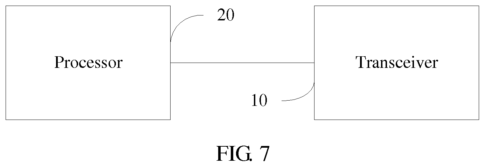

The present invention further provides user equipment. As shown in FIG. 7, the user equipment includes a transceiver 10 and a processor 20.

The transceiver 10 is configured to: after transmitting first data to a network device in a grant-free transmission mode, determine, through listening, whether there is feedback information for the first data from the network device.

The processor 20 is configured to determine, based on the feedback information obtained through listening, a transmission mode used after the feedback information is obtained through listening.

That the processor 20 determines, based on the feedback information obtained through listening, a transmission mode used after the feedback information is obtained through listening includes:
determining that the feedback information obtained through listening includes first information instructing to retransmit the first data, and determining, based on the feedback information, a transmission mode used within a first time resource, where the first time resource is a time interval between a time at which the first data is retransmitted according to the instruction of the first information and a time at which the feedback information is obtained through listening for a next time.

It may be learned that the communications device shown in FIG. 7 performs the method provided in FIG. 2. Specifically, the transceiver 10 performs step S10 and step S30 in the embodiment shown in FIG. 2, and the processor 20 performs step S20 in the embodiment shown in FIG. 2. Therefore, for more details about performing the foregoing steps by the transceiver 10 and the processor 20, refer to the related descriptions in the embodiment shown in FIG. 2. Details are not described herein again.

In the present invention, the processor 20 may be a general-purpose processor, for example, but is not limited to, a central processing unit (Central Processing Unit, CPU); or may be a dedicated processor, for example, but is not limited to, a digital signal processor (Digital Signal Processor, DSP), an application-specific integrated circuit (Application Specific Integrated Circuit, ASIC), and a field programmable gate array (Field Programmable Gate Array, FPGA). In addition, the processor 10 may alternatively be a combination of a plurality of processors.

All or some may be implemented by software, hardware, firmware, or any combination thereof. When software is used to implement the invention, all or some of the examples may be implemented in a form of a computer program product. The computer program product includes one or more computer instructions. When the computer program instructions are loaded and executed on a computer, all or some of the procedures or functions according to the embodiments of the present invention are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

## Claims

1. A data transmission method, wherein the method comprises:
after transmitting (S10) first data to a network device in a grant-free transmission mode, determining, by user equipment through listening, whether there is feedback information for the first data from the network device;
determining (S20), by the user equipment based on the feedback information obtained through listening, a transmission mode used after the feedback information is obtained through listening; and
transmitting (S30), by the user equipment, data according to the used transmission mode;
wherein the determining (S20), by the user equipment based on the feedback information obtained through listening, a transmission mode used after the feedback information is obtained through listening comprises:
determining that the feedback information obtained through listening comprises first information instructing to retransmit the first data, and determining, based on the feedback information, a transmission mode used within a first time resource, wherein the first time resource is a time interval between a time at which the first data is retransmitted according to the instruction of the first information and a time at which the feedback information is obtained through listening for a next time;
wherein the determining, based on the feedback information, a transmission mode used within a first time resource comprises:
when determining that the first information is uplink transmission grant information for the first data, determining, based on pre-stored configuration information or second information that is comprised in the feedback information, the transmission mode used within the first time resource, wherein the configuration information or the second information is used to instruct to: stop transmitting data within a time resource after data retransmission is completed in the grant-based transmission mode once;
wherein the determining, based on pre-stored configuration information or second information that is comprised in the feedback information, the transmission mode used within the first time resource comprises:
when the configuration information or the second information instructs to stop transmitting data, skipping, by the user equipment, transmitting any data within the first time resource.

2. The method according to claim 1, wherein the determining (S20), by the user equipment based on the feedback information obtained through listening, a transmission mode used after the feedback information is obtained through listening comprises:
when the feedback information comprises third information indicating that the first data has been correctly received, transmitting second data in the grant-free transmission mode or skipping transmitting data within the first available time resource after the feedback information is obtained through listening.

3. The method according to claim 1 or 2, wherein the determining, through listening, whether there is feedback information for the first data from the network device comprises:
determining, through listening in a predetermined time window, whether there is the feedback information for the first data from the network device.

4. The method according to any one of claims 1 to 3, wherein the method further comprises:
transmitting, by the user equipment, the first data in the grant-free transmission manner within a second time resource, wherein the second time resource is a time interval between a time at which the first data is transmitted to the network device in the grant-free transmission mode and a time at which the feedback information is obtained through listening for the first time.

5. The method according to any one of claims 1 to 4, wherein the method further comprises:
before the user equipment transmits the first data to the network device in the grant-free transmission mode, further reporting, by the user equipment, a receiving capability of the user equipment to the network device.

6. User equipment, wherein the user equipment comprises:
a transceiver (10), configured to: after transmitting first data to a network device in a grant-free transmission mode, determine, through listening, whether there is feedback information for the first data from the network device; and
a processor (20), configured to determine, based on the feedback information obtained through listening, a transmission mode used after the feedback information is obtained through listening, wherein
the transceiver (10) is further configured to transmit data according to the used transmission mode;
wherein the determining, based on the feedback information obtained through listening, a transmission mode used after the feedback information is obtained through listening comprises:
determining that the feedback information obtained through listening comprises first information instructing to retransmit the first data, and determining, based on the feedback information, a transmission mode used within a first time resource, wherein the first time resource is a time interval between a time at which the first data is retransmitted according to the instruction of the first information and a time at which the feedback information is obtained through listening for a next time;
wherein the determining, based on the feedback information, a transmission mode used within a first time resource comprises:
when determining that the first information is uplink transmission grant information for the first data, determining, based on configuration information or second information that is comprised in the feedback information, the transmission mode used within the first time resource, wherein the configuration information or the second information is used to instruct to: stop transmitting data within a time resource after data retransmission is completed in the grant-based transmission mode once;
wherein the determining, based on pre-stored configuration information or second information that is comprised in the feedback information, the transmission mode used within the first time resource comprises:
when the configuration information or the second information instructs to stop transmitting data, skipping, by the user equipment, transmitting any data within the first time resource.

7. The user equipment according to claim 6, configured to implement the method in accordance with anyone of claims 2 to 5.

## Patentansprüche

1. Datenübertragungsverfahren, wobei das Verfahren umfasst:
nach dem Übertragen (S10) erster Daten an eine Netzwerkvorrichtung in einem gewährungsfreien Übertragungsmodus Bestimmen durch die Benutzerausrüstung durch Abfragen, ob Rückmeldungsinformationen für die ersten Daten aus der Netzwerkvorrichtung vorhanden sind;
Bestimmen (S20) eines Übertragungsmodus, der verwendet wird, nachdem die Rückmeldungsinformationen durch Abfragen erhalten wurden, durch die Benutzerausrüstung basierend auf den durch Abfragen erhaltenen Rückmeldungsinformationen; und
Übertragen (S30) von Daten durch die Benutzerausrüstung gemäß dem verwendeten Übertragungsmodus;
wobei das Bestimmen (S20) eines Übertragungsmodus, der verwendet wird, nachdem die Rückmeldungsinformationen durch Abfragen erhalten wurden, durch die Benutzerausrüstung basierend auf den durch Abfragen erhaltenen Rückmeldungsinformationen umfas st:
Bestimmen, dass die durch Abfragen erhaltenen Rückmeldungsinformationen erste Informationen umfassen, die anweisen, die ersten Daten erneut zu übertragen, und Bestimmen, basierend auf den Rückmeldungsinformationen, eines Übertragungsmodus, der innerhalb einer ersten Zeitressource verwendet wird, wobei die erste Zeitressource ein Zeitintervall zwischen einem Zeitpunkt, zu dem die ersten Daten gemäß der Anweisung der ersten Informationen erneut übertragen werden, und einem Zeitpunkt ist, zu dem die Rückmeldungsinformationen durch Abfragen für ein nächstes Mal erhalten werden;
wobei das Bestimmen eines innerhalb einer ersten Zeitressource verwendeten Übertragungsmodus basierend auf den Rückmeldungsinformationen umfasst:
wenn bestimmt wird, dass die ersten Informationen Aufwärtsstrecken-Übertragungsgewährungsinformationen für die ersten Daten sind, Bestimmen, basierend auf vorgespeicherten Konfigurationsinformationen oder zweiten Informationen, die in den Rückmeldungsinformationen enthalten sind, des Übertragungsmodus, der innerhalb der ersten Zeitressource verwendet wird, wobei die Konfigurationsinformationen oder die zweiten Informationen verwendet werden, um anzuweisen: das Übertragen von Daten innerhalb einer Zeitressource zu stoppen, nachdem die Datenwiederholungsübertragung in dem gewährungsbasierten Übertragungsmodus einmal abgeschlossen ist;
wobei das Bestimmen des innerhalb der ersten Zeitressource verwendeten Übertragungsmodus basierend auf vorgespeicherten Konfigurationsinformationen oder zweiten Informationen, die in den Rückmeldungsinformationen enthalten sind, umfasst:
wenn die Konfigurationsinformationen oder die zweiten Informationen anweisen, die Übertragung von Daten zu stoppen, Überspringen der Übertragung von Daten innerhalb der ersten Zeitressource durch die Benutzerausrüstung.

2. Verfahren gemäß Anspruch 1, wobei das Bestimmen (S20) eines Übertragungsmodus, der verwendet wird, nachdem die Rückmeldungsinformationen durch Abfragen erhalten wurden, durch die Benutzerausrüstung basierend auf den durch Abfragen erhaltenen Rückmeldungsinformationen umfasst:
wenn die Rückmeldungsinformationen dritte Informationen umfassen, die angeben, dass die ersten Daten korrekt empfangen worden sind, Übertragen von zweiten Daten im gewährungsfreien Übertragungsmodus oder Überspringen der Übertragung von Daten innerhalb der ersten verfügbaren Zeitressource, nachdem die Rückmeldungsinformationen durch Abfragen erhalten wurden.

3. Verfahren gemäß Anspruch 1 oder 2, wobei das Bestimmen durch Abfragen, ob Rückmeldungsinformationen für die ersten Daten aus der Netzwerkvorrichtung vorhanden sind, umfasst:
Bestimmen durch Abfragen in einem vorbestimmten Zeitfenster, ob die Rückmeldungsinformationen für die ersten Daten aus der Netzwerkvorrichtung vorhanden sind.

4. Verfahren gemäß einem der Ansprüche 1 bis 3, wobei das Verfahren ferner umfasst: Übertragen der ersten Daten durch die Benutzerausrüstung in der gewährungsfreien Übertragungsweise innerhalb einer zweiten Zeitressource, wobei die zweite Zeitressource ein Zeitintervall zwischen einem Zeitpunkt, zu dem die ersten Daten an die Netzwerkvorrichtung im gewährungsfreien Übertragungsmodus übertragen werden, und einem Zeitpunkt ist, zu dem die Rückmeldungsinformationen durch erstmaliges Abfragen erhalten werden.

5. Verfahren gemäß einem der Ansprüche 1 bis 4, wobei das Verfahren ferner umfasst: bevor die Benutzerausrüstung die ersten Daten an die Netzwerkvorrichtung im gewährungsfreien Übertragungsmodus überträgt, weiteres Melden einer Empfangsfähigkeit der Benutzerausrüstung an die Netzwerkvorrichtung durch die Benutzerausrüstung.

6. Benutzerausrüstung, wobei die Benutzerausrüstung umfasst:
einen Sender-Empfänger (10), der dazu konfiguriert ist: nach dem Übertragen erster Daten an eine Netzwerkvorrichtung in einem gewährungsfreien Übertragungsmodus durch Abfragen zu bestimmen, ob Rückmeldungsinformationen für die ersten Daten aus der Netzwerkvorrichtung vorhanden sind; und
einen Prozessor (20), der dazu konfiguriert ist, basierend auf den durch Abfragen erhaltenen Rückmeldungsinformationen einen Übertragungsmodus zu bestimmen, der verwendet wird, nachdem die Rückmeldungsinformationen durch Abfragen erhalten wurden, wobei
der Sender-Empfänger (10) ferner dazu konfiguriert ist, Daten gemäß dem verwendeten Übertragungsmodus zu übertragen;
wobei das Bestimmen, basierend auf den durch Abfragen erhaltenen Rückmeldungsinformationen, eines Übertragungsmodus, der verwendet wird, nachdem die Rückmeldungsinformationen durch Abfragen erhalten wurden, umfasst:
Bestimmen, dass die durch Abfragen erhaltenen Rückmeldungsinformationen erste Informationen umfassen, die anweisen, die ersten Daten erneut zu übertragen, und Bestimmen, basierend auf den Rückmeldungsinformationen, eines Übertragungsmodus, der innerhalb einer ersten Zeitressource verwendet wird, wobei die erste Zeitressource ein Zeitintervall zwischen einem Zeitpunkt, zu dem die ersten Daten gemäß der Anweisung der ersten Informationen erneut übertragen werden, und einem Zeitpunkt ist, zu dem die Rückmeldungsinformationen durch Abfragen für ein nächstes Mal erhalten werden;
wobei das Bestimmen eines innerhalb einer ersten Zeitressource verwendeten Übertragungsmodus basierend auf den Rückmeldungsinformationen umfasst:
wenn bestimmt wird, dass die ersten Informationen Aufwärtsstrecken-Übertragungsgewährungsinformationen für die ersten Daten sind, Bestimmen, basierend auf Konfigurationsinformationen oder zweiten Informationen, die in den Rückmeldungsinformationen enthalten sind, des innerhalb der ersten Zeitressource verwendeten Übertragungsmodus, wobei die Konfigurationsinformationen oder die zweiten Informationen verwendet werden, um anzuweisen: das Übertragen von Daten innerhalb einer Zeitressource zu stoppen, nachdem die Datenwiederholungsübertragung in dem gewährungsbasierten Übertragungsmodus einmal abgeschlossen ist;
wobei das Bestimmen des innerhalb der ersten Zeitressource verwendeten Übertragungsmodus basierend auf vorgespeicherten Konfigurationsinformationen oder zweiten Informationen, die in den Rückmeldungsinformationen enthalten sind, umfasst:
wenn die Konfigurationsinformationen oder die zweiten Informationen anweisen, die Übertragung von Daten zu stoppen, Überspringen der Übertragung von Daten innerhalb der ersten Zeitressource durch die Benutzerausrüstung.

7. Benutzerausrüstung gemäß Anspruch 6, die dazu konfiguriert ist, das Verfahren gemäß einem der Ansprüche 2 bis 5 zu implementieren.

## Revendications

1. Procédé de transmission de données, le procédé comprenant les étapes consistant à :
après la transmission (S10) de premières données à un dispositif de réseau dans un mode de transmission sans octroi, déterminer, par un équipement d'utilisateur par écoute, s'il existe des informations de retour pour les premières données en provenance du dispositif de réseau ;
déterminer (S20), par l'équipement d'utilisateur sur la base des informations de retour obtenues par écoute, un mode de transmission utilisé après l'obtention des informations de retour par écoute ; et
transmettre (S30), par l'équipement d'utilisateur, des données selon le mode de transmission utilisé ;
la détermination (S20), par l'équipement d'utilisateur sur la base des informations de retour obtenues par écoute, d'un mode de transmission utilisé après l'obtention des informations de retour par écoute comprenant les étapes consistant à :
déterminer que les informations de retour obtenues par écoute comprennent des premières informations donnant l'instruction de retransmettre les premières données,
et déterminer, sur la base des informations de retour, un mode de transmission utilisé dans une première ressource de temps, la première ressource de temps étant un intervalle de temps entre un moment où les premières données sont retransmises selon l'instruction des premières informations et un moment où les informations de retour sont obtenues par écoute pour une prochaine fois ;
la détermination, sur la base des informations de retour, d'un mode de transmission utilisé dans une première ressource de temps comprenant l'étape consistant à :
lorsqu'il est déterminé que les premières informations sont des informations d'octroi de transmission en liaison montante pour les premières données, déterminer, sur la base d'informations de configuration préstockées ou de deuxièmes informations qui sont comprises dans les informations de retour, le mode de transmission utilisé dans la première ressource de temps, les informations de configuration ou les deuxièmes informations étant utilisées pour donner l'instruction suivante : arrêter de transmettre des données dans une ressource de temps après l'achèvement de la retransmission de données dans le mode de transmission avec octroi une fois ;
la détermination, sur la base d'informations de configuration préstockées ou de deuxièmes informations qui sont comprises dans les informations de retour, du mode de transmission utilisé dans la première ressource de temps comprend l'étape consistant à :
lorsque les informations de configuration ou les deuxièmes informations donnent l'instruction d'arrêter de transmettre des données, omettre, par l'équipement d'utilisateur, de transmettre de quelconques données dans la première ressource de temps.

2. Procédé selon la revendication 1, dans lequel la détermination (S20), par l'équipement d'utilisateur sur la base des informations de retour obtenues par écoute, d'un mode de transmission utilisé après l'obtention des informations de retour par écoute comprend l'étape consistant à :
lorsque les informations de retour comprennent des troisièmes informations indiquant que les premières données ont été correctement reçues, transmettre des secondes données dans le mode de transmission sans octroi ou omettre de transmettre des données dans la première ressource de temps disponible après l'obtention des informations de retour par écoute.

3. Procédé selon la revendication 1 ou 2, dans lequel le fait de déterminer, par écoute, s'il existe des informations de retour pour les premières données en provenance du dispositif de réseau comprend l'étape consistant à :
déterminer, par écoute dans une fenêtre de temps prédéterminée, si les informations de retour existent pour les premières données en provenance du dispositif de réseau.

4. Procédé selon l'une quelconque des revendications 1 à 3, le procédé comprenant en outre l'étape consistant à :
transmettre, par l'équipement d'utilisateur, les premières données dans le mode de transmission sans octroi dans une seconde ressource de temps, la seconde ressource de temps étant un intervalle de temps entre un moment où les premières données sont transmises au dispositif de réseau dans le mode de transmission sans octroi et un moment où les informations de retour sont obtenues par écoute pour la première fois.

5. Procédé selon l'une quelconque des revendications 1 à 4, le procédé comprenant en outre l'étape consistant à :
avant la transmission, par l'équipement d'utilisateur, des premières données au dispositif de réseau dans le mode de transmission sans octroi, signaler en outre, par l'équipement d'utilisateur, une capacité de réception de l'équipement d'utilisateur au dispositif de réseau.

6. Équipement d'utilisateur, l'équipement d'utilisateur comprenant :
un émetteur-récepteur (10), configuré pour: après la transmission de premières données à un dispositif de réseau dans un mode de transmission sans octroi, déterminer,
par écoute, s'il existe des informations de retour pour les premières données en provenance du dispositif de réseau ; et
un processeur (20), configuré pour déterminer, sur la base des informations de retour obtenues par écoute, un mode de transmission utilisé après l'obtention des informations de retour par écoute,
l'émetteur-récepteur (10) étant en outre configuré pour transmettre des données selon le mode de transmission utilisé ;
la détermination, sur la base des informations de retour obtenues par écoute, d'un mode de transmission utilisé après l'obtention des informations de retour par écoute comprenant les étapes consistant à :
déterminer que les informations de retour obtenues par écoute comprennent des premières informations donnant l'instruction de retransmettre les premières données, et déterminer, sur la base des informations de retour, un mode de transmission utilisé dans une première ressource de temps, la première ressource de temps étant un intervalle de temps entre un moment où les premières données sont retransmises selon l'instruction des premières informations et un moment où les informations de retour sont obtenues par écoute pour une prochaine fois ;
la détermination, sur la base des informations de retour, d'un mode de transmission utilisé dans une première ressource de temps comprenant l'étape consistant à :
lorsqu'il est déterminé que les premières informations sont des informations d'octroi de transmission en liaison montante pour les premières données, déterminer, sur la base d'informations de configuration ou de deuxièmes informations qui sont comprises dans les informations de retour, le mode de transmission utilisé dans la première ressource de temps, les informations de configuration ou les deuxièmes informations étant utilisées pour donner l'instruction suivante : arrêter de transmettre des données dans une ressource de temps après l'achèvement de la retransmission de données dans le mode de transmission avec octroi une fois ;
la détermination, sur la base d'informations de configuration préstockées ou de deuxièmes informations qui sont comprises dans les informations de retour, du mode de transmission utilisé dans la première ressource de temps comprenant l'étape consistant à :
lorsque les informations de configuration ou les deuxièmes informations donnent l'instruction d'arrêter de transmettre des données, omettre, par l'équipement d'utilisateur, de transmettre de quelconques données dans la première ressource de temps.

7. Équipement d'utilisateur selon la revendication 6, configuré pour mettre en œuvre le procédé selon l'une quelconque des revendications 2 à 5.
